# EUROPEAN PATENT SPECIFICATION

(11) **EP 4 673 307 B1**
(45) Date of publication and mention of the grant of the patent: **21.10.2026**
(21) Application number: 24706537.8
(22) Date of filing: 20.02.2024
(51) Int. Cl.: B29D 28/00, B32B 3/16, B32B 5/06, B32B 5/10, D04H 3/004, E02B 3/12, E02D 17/20, B29K 105/10

(54) **REINFORCING COMPOSITE MATERIAL**
VERSTÄRKENDER VERBUNDWERKSTOFF
MATÉRIAU COMPOSITE DE RENFORCEMENT

(30) Priority: 27.02.2023 IT 202300003444
(43) Date of publication of application: 07.01.2026
(73) Proprietor: Hyper Fibers S.r.l., 44011 Argenta (FE) (IT)
(72) Inventor: BRUSA, Nicola, 44011 Argenta (FE) (IT)
(74) Representative: Bellomia, Paolo
(86) International application number: PCT/IB2024/051608
(87) International publication number: WO 2024/180423

(56) References cited:
- WO-A1-99/28563
- GB-A- 1 319 603
- KR-B1- 101 447 021
- KR-B1- 102 032 513
- US-A- 5 980 155
- US-A1- 2006 133 900
- US-A1- 2010 247 239
- US-A1- 2020 291 557
- US-A1- 2021 206 137

## Description

The present invention relates to a reinforcing composite material.

In particular, the present invention relates to a reinforcing composite material for the construction, civil, environmental, hydraulic, geotechnical and mining engineering sectors, and more generally for all those applications where efficient soil reinforcement/containment is required.

The reinforcing composite material referred to here is a flexible ribbon-like material in strip form, i.e. it has a much smaller thickness with respect to the other two dimensions.

Typically, reinforcing composite materials used in the construction industry are defined by the use of reinforcing strips, i.e. reinforcing composite products in the form of a strip (also known as "strap" or "tape" or "geo-strip") generally obtained by co-extruding a coating capsule containing a core of fibres, filaments, wires or inserts with tensile strength properties.

Using high-tenacity wires, yarns and fibres, it is in fact possible to obtain reinforcing strips that offer the necessary support and resistance to loads and greater durability than ordinary structural construction methods and materials such as steel and concrete.

The strips are then typically combined in warp and weft to create meshes or grids (also known as "geogrids") and are then inserted into the ground to reinforce it and thus create retaining walls or embankments reinforced both internally and at the base.

The Applicant has noted, however, that geogrids of the known type have certain limitations that in some cases discourage or even prevent their use for certain types of applications.

In particular, strips of the known type, always and only being combined to form a grid, can provide tensile strength in both directions (warp and weft); however, for applications such as the creation of retaining walls or escarpment stabilisation, geogrids are typically required to provide strength in a preferential direction (typically the warp, as opposed to the laying direction). Indeed, in the stabilisation of embankments, escarpments, walls or slopes, the fact of having tensile strength in both directions is not strictly necessary; on the contrary, the provision of two directions of resistance, in addition to defining an overdesigned or overengineered solution, could limit the tensional response in the required direction.

In design engineering and standards, one main direction of load and force distribution is typically considered, and therefore one direction of tensile strength may be sufficient and guarantee the stability of the structure in both the short and long term.

Therefore, although the grid design allows the reinforcement to be laid precisely (as opposed to individual strips that would have to be laid one by one), these geogrids are unnecessarily expensive, redundant and heavy to handle.

The Applicant also noted that it is disadvantageous that geogrids alone are not able to fulfil any function other than that of structural reinforcement, so strips are often combined with a sheet of different material with a different function.

Once laid in place, however, tension, loosening or slippage can often occur between the strips and the sheet so that the soil is not properly stabilised/contained. The risk of compromising the entire structural reinforcement in such cases is very high.

The Applicant has also noted how disadvantageously in some applications additional stresses could be generated between the soil and the reinforcement strips so that the strips could move and even be pulled out of the ground.

The sheet combined with the strips and inserted in contact with the ground, typically presenting smooth outer surfaces, may also be subject to loosening or sliding phenomena, so the strip reinforcement system can be seriously compromised.

US2020/0291557A1 discloses an example of unidirectional non-crimp fabric for the production of components made of fiber-reincforced composites.

### SUMMARY OF THE INVENTION

In this context, the technical task at the basis of the present invention is to propose a reinforcing composite material that overcomes one or more of the drawbacks of the prior art mentioned above, providing a technical solution that is simple and inexpensive to produce, that is effective, efficient, convenient and reliable in use, and that is capable of simplifying reinforcement operations by improving adherence to the ground when in place.

The defined technical task and the specified aims are substantially achieved by a reinforcing composite material, comprising the technical characteristics set forth in one or more of the appended claims.

In particular, the present invention provides a reinforcing composite material comprising at least one sheet made of a flexible material and a plurality of reinforcing composite strips.

Each reinforcing composite strip comprises:
- a covering capsule surrounding a plurality of longitudinal channels developing parallel to a longitudinal development direction of the reinforcing composite strip and arranged in sequence between opposite side ends of said reinforcing composite strip, and
- a plurality of longitudinal reinforcement fibres arranged within the longitudinal channels.

The reinforcing composite strips are coupled to the sheet at the respective lower surfaces of the covering capsules so that their respective longitudinal development directions are parallel.

The reinforcing composite material does not comprise any further reinforcing composite strip developing along respective longitudinal development direction perpendicular to the longitudinal development direction of the composite reinforcing strip.

In other words, all the reinforcing composite strips are arranged parallel to each other so as to not cross each other, hence the parallel strips are adjacent to each other so as no contact occurs among them.

Thus, the reinforcing composite material of the present invention do not comprise any grid, as only parallel longitudinal reinforcing composite strips are present, said reinforcing composite strips being not linked by any transverse or perpendicular strip.

The reinforcing composite material according to the invention, thus having strips arranged in weft only or warp only, is able to provide the required strength in the orientation required by the design, with less superfluous mass than known grids and therefore less material to be handled on site, while at the same time guaranteeing precise positioning of the strips as they are coupled to the sheets, and proper functioning of the composite material once installed.

The reinforcing strips are made integral to the sheet and therefore held advantageously in place by it, thus preventing any relative movement between the strips and the sheet.

The orientation of the strips defined in the design advantageously determines the reinforcement direction, also eliminating waste due to site work. The composite material can therefore also be placed parallel to the structure and not perpendicularly as is the case with geogrids or geostrips of the prior art.

Obviously, a single sheet laid separately, without coupling to the strips, would have entailed double coupling work *in situ* and in any case could have generated a layer of discontinuity between the strips and the ground, whereas the invention advantageously presents a pre-packaged coupling, whereby the reinforcing composite material is already "ready to use" to be laid and put in place for efficient structural reinforcement.

The reinforcing composite material of the present invention therefore facilitates laying operations and reduces laying time as it is already pre-coupled and ready to use for efficient performance.

Advantageously also on the upper surface of each covering capsule, opposite to the lower surface coupled to the sheet, surface reliefs are made having prevailing development directions that are parallel to the longitudinal development direction of the reinforcing composite strip, each surface relief extending at least partially between opposite terminal ends of the reinforcing composite strip.

In other words, the reliefs are oriented parallel to the direction X. Advantageously, this simplifies the production process: for example, if the strip is produced using an extrusion technique, the reliefs are parallel to the extrusion direction.

Advantageously, the creation of these surface reliefs, preferably by moulding, punching, marking or embossing, gives the strip greater frictional and anti-creep performance when placed in use in the ground, increasing its resistance to loosening (the so-called "pull-out" phenomenon) and improving its friction efficiency.

Thanks to the presence of the surface reliefs, it is therefore possible to increase the adhesion characteristics of the strips to the ground, guaranteeing optimal interaction between the reinforcement and the ground, as well as optimal maintenance of the positioning of the flexible reinforcing material after installation, i.e. when the strips are submerged in the ground.

Advantageously, the reinforcing composite material according to the invention can also be made in tape form and supplied in roll form so as to simplify the transport and laying operations.

The dependent claims herein incorporated for reference, correspond to different embodiments of the invention.

Further characteristics and advantages of the present invention will appear more clearly from the indicative, and therefore non-limiting, description of a preferred but not exclusive embodiment of a reinforcing composite material, as illustrated in the appended drawings.
Figure 1 is a schematic perspective view of a reinforcing strip forming part of the reinforcing composite material covered by the present invention.
Figures 2 and 3 are schematic sections of a reinforcing composite material according to the present invention in accordance with two embodiments, while Figures 2A and 3A are two enlargements of the respective sheets of Figures 2 and 3.
Figures 4 and 5 are schematic perspective views of rolls comprising a reinforcing composite material tape in accordance with two alternative embodiments of the present invention.

With reference to the appended figures, a reinforcing composite material is indicated overall as 100.

The reinforcing composite material 100 according to the present invention advantageously comprises at least one sheet 10, 20 of flexible material and a plurality of reinforcing composite strips 1.

The reinforcing composite material 100 referred to herein is therefore a multilayer material in the form of a sheet with a certain thickness, commonly referred to as a "geo-cover" or "geo-membrane" or "geo-mat", and is suitable to be placed in contact with the soil, even in immersed conditions, to reinforce, protect, contain and stabilise it.

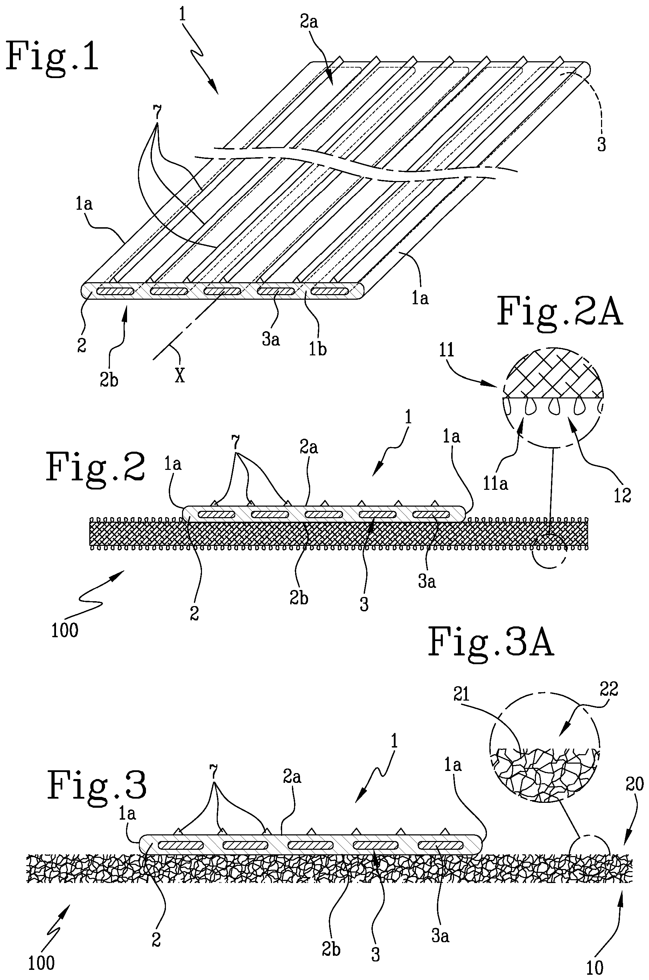

With reference to Figure 1, it should be noted that the term "strip" is intended to denote a substantially flat ribbon-like element having a length, measured along a longitudinal development direction X of the strip 1, which is greater than the width of the strip 1, measured perpendicularly to the longitudinal development direction X, and having a width which is much greater than the thickness of the strip 1, the latter being measured perpendicularly to the longitudinal development direction X and the width of the strip 1.

Preferably the strip 1 has a width comprised between 10 and 200 mm, even more preferably equal to 85 mm.

The strip 1 has two opposite side ends 1a with respect to the longitudinal development direction X and two opposite terminal ends 1b, developing perpendicular to the longitudinal development direction X. In other words, the length of the strip 1 is measurable between the terminal ends 1b, while the width is measurable between the side ends 1a.

The strip 1 comprises a coating capsule 2, e.g. a polymer matrix (e.g. LLPDE), surrounding a plurality of longitudinal channels 3 running parallel to the longitudinal direction X of the reinforcing strip 1 and arranged in sequence between the opposite side ends 1a.

In other words, the longitudinal channels 3 are arranged parallel adjacent to one other in sequence within the strip 1 and extend along the entire length A of the strip 1.

The strip 1 advantageously comprises a plurality of longitudinal reinforcing fibres 3a arranged within the longitudinal channels 3.

In particular, a "plurality of longitudinal reinforcing fibres" 3a means a yarn or filament made from a plurality of fibres, strands, filaments or inserts, with tensile strength characteristics and joined together longitudinally to define a longitudinally developed reinforcing element.

Preferably, the longitudinal reinforcing fibres 3a are made of synthetic or polymeric or bio-polymeric or natural or plant-based materials. Inserts of ferrous or metallic origin can also be provided.

Note therefore that the term "longitudinal" is intended to indicate that the plurality of fibres defines a yarn developing in a direction parallel to the longitudinal development direction X of the strip 1.

According to a possible embodiment, not illustrated, the plurality of fibres can also be defined by yarns or threads formed from mixed structures or combined to form a hybrid yarn/structure (capable of increasing the final performance of the strip itself).

Preferably each channel 3 has a width value, measured perpendicular to the longitudinal development direction X of the reinforcing strip 1 and parallel to the width of the reinforcing strip 1, comprised between 0.5 mm and 100 mm, even more preferably comprised between 2 mm and 10 mm.

Preferably the channel 3 has a thickness value, measured perpendicular to the longitudinal development direction X of the reinforcing strip 1 and parallel to the thickness of the reinforcing strip 1, comprised between 0.1 mm and 20 mm, even more preferably comprised between 1 mm and 5 mm.

Preferably the distance between consecutive longitudinal channels 3 is smaller than the width of the longitudinal channels 3.

The coating capsule 2 has an upper surface 2a and an opposite lower surface 2b.

Advantageously, the strips 1 are coupled to the sheet 10, 20 at the respective lower surfaces 2b of the covering capsules 2 so that the respective longitudinal development directions X are parallel.

Advantageously, on an upper surface 2a of each covering capsule 2, opposite the lower surface 2b coupled to the sheet 10, 20 surface reliefs 7 are made having prevailing development directions that are parallel to the direction of longitudinal development X of the reinforcing composite strip 1. In particular, each surface relief 7 extends at least partially between opposite terminal ends 1b of the reinforcing composite strip 1.

Advantageously, the cross-section of the surface reliefs 7 can be chosen according to requirements and design choices, e.g. in the appended figures it is triangular in shape but could be made round or rectangular.

The choice of conformation of the reliefs 7 is advantageously configured according to the morphology of the ground in which the reinforcing strip 1 will act.

Preferably each strip 1 comprises a number of reliefs comprised between 1 and 100, even more preferably equal to 10.

Each relief 7 has a height, measured perpendicularly to the upper surface 2a of the covering capsule 2, less than the thickness of the covering capsule 2 (measured as the distance between the upper surface 2a and the lower surface 2b), preferably comprised between 0.01 mm and 5 mm, even more preferably equal to 0.5 mm.

According to a possible embodiment, not illustrated in the appended figures, preferably the surface reliefs 7 present a geometrically variable profile along their prevailing development directions. For example, it is possible to have reliefs 7 with ridged, serrated, stepped profiles, etc. with varying spacing, dimensions, thicknesses, to further improve adherence characteristics with the soil according to its particle size and consistency.

With reference to the embodiment illustrated in the appended figures, preferably the surface reliefs 7 are continuous, i.e. extending completely between the opposite terminal ends 1b of the strip 1.

According to a possible embodiment not illustrated in the appended figures, preferably the reliefs 7 may comprise respective longitudinal channels developing parallel to the longitudinal development direction X of the strip 1 and a plurality of longitudinal reinforcing fibres arranged within the longitudinal channels.

In addition, the reliefs 7 can be made from a different polymer matrix from the covering capsule 2 of the strip 1.

Preferably the sheet 10, 20 can have one or more of the following functional characteristics: filtration, separation, drainage, anti-erosion, containment, waterproofing.

Depending on the functional type of material of which the sheet 10, 20 is made, it can therefore be defined as: geotextile (preferably PP with needle-punched threads), geo-mat (preferably with 3D structure), geo-membrane (preferably PE), geo-drain or geo-cover (also geo-cement, GCCMs).

The lamination of the strips 1 to the sheet 10, 20 can be carried out according to one or more of the following production techniques: knitting, interweaving, bonding, stitching, interlocking, welding, glueing, heating, sewing, spraying.

In any case, the term "coupled" means that the strips 1 are made integral and irreversibly connected to the sheet 10, 20, i.e. they completely adhere to the sheet 10, 20 at the respective lower surfaces 2b (thus there are no overlaps as in the case of known grids).

It should be noted that advantageously, the present invention does not require additional reinforcement strips arranged perpendicularly to the parallel strips 1, making the composite material 100 easy to manufacture and also speeding up its production.

According to a possible embodiment, preferably the sheet 10, 20 made of flexible material comprises a 3D structure of thread-like elements 11, 21 defining between them a plurality of cavities 12, 22 suitable, in use, to be at least partially interpenetrated with the ground.

In other words, the cavities 12, 22 interposed between the thread-like elements 11, 21, in particular the more superficial cavities 12, 22 defining the outer surface of the sheet 10, 20, when the material 100 is installed and then laid in contact with the soil, are configured to receive small portions of soil (depending on the particle size of the soil, it is possible to size the optimal conformation of the cavities 12, 22) thus increasing the friction with the soil, so as to improve the adherence between the two elements and prevent them from slipping/loosening during the cycle of use.

The sheet 10, 20 thus created in other words is substantially defined by rough outer surfaces suitable to be placed, in use, frictionally in contact with the ground. The cavities 12, 22 are in fact open to the outside of the sheet 10, 20 to interface and be interpenetrated by the ground creating friction.

The 3D structure of the thread-like elements 11, 21 ("thread-like elements" is intended to mean threads, fibres or filaments) can be twisted, knotted or tangled in a regular or random/irregular manner.

The sheet 10, 20 made of flexible material can thus be defined as a so-called "cover", i.e. a three-dimensional structure of thread-like elements 11, 21 having a prevailing development dimension with respect to the others (i.e. a sheet) and presenting rough outer surfaces (i.e. rough, i.e. not smooth to the touch, or irregular, i.e. presenting ripples, or jagged, i.e. presenting a succession of irregular / non-homogeneous projections and indentations defined by the outlines of the threads themselves and/or by a tangle of the threads themselves). The rough outer surfaces thus advantageously lead to an increase in the surface friction of the reinforcing composite material 100 not only at the strips 1 (due to the reliefs 7) but also at the sheet 10, 20. The surfaces of the cover when in contact with the ground are therefore frictional surfaces that improve the characteristics of adherence to the ground, preventing slipping and loosening when in place.

The resulting reinforcing composite material 100 can advantageously be described as reinforced and having "improved adhesion".

The reinforcing composite material 100 can therefore be advantageously used to prevent erosion phenomena and planar surface subsidence of escarpments or retaining walls.

Figure 2 illustrates a first possible embodiment of a sheet 10 that can be used for making the material 100 according to the present invention, wherein preferably the 3D structure of thread-like elements is made (with reference to the enlargement of Figure 3A) with a layer of textile material 11 presenting a plurality of rings 11a of protruding filaments defining the plurality of cavities 12 between them.

In particular, the rings 11a may be defined by filaments drawn from the layer of textile material 11 (obtained according to known drawing techniques) or they may be made from additional filaments interlaced with the textile structure to define loops, flounces or bridging threads. In addition, any further filaments can be made of non-textile material.

In other words, the sheet 10 has a base layer with interwoven filaments (i.e. the layer of textile material 11) and a number of through rings 11a protruding from the base layer that define the cavities 12 between them, creating a rough surface that generates friction with the ground and improves the adhesion of the reinforcing system.

Figure 3 illustrates a second possible embodiment of a sheet 20 that can be used to make the material 100 according to the present invention, wherein preferably the 3D structure of thread-like elements is made (with reference to the enlargement of Figure 2A) of tangled synthetic filaments 21, for example made of polypropylene, even more preferably made by spraying or extrusion or additive manufacturing. Between the entangled synthetic filaments 21 the cavities 22 are defined.

An example of such a sheet 20 is the so-called "geo-mat", i.e. a three-dimensional structure of highly deformable polypropylene monofilaments with high porosity (normally around 90% or even more). Geo-mats are long-term solutions, capable of handling erosion control problems in both dry and wet environments. They can protect a slope from erosion caused by the flow of water from rainfall, streams or rivers.

The coupling of the reinforcing strips 1 to the geo-mat makes it possible to obtain a so-called "reinforced geo-mat", which guarantees a homogeneous distribution of forces between the various strips and thus improves the strength characteristics if the composite is subjected to loads or stresses: the load is supported by the strips 1 and not transferred to the geo-mat, which is therefore not subject to tearing/laceration phenomena.

Preferably, in accordance with an embodiment not illustrated in the appended figures, it is possible for the reinforcing strips 1 to be at least partially embedded in the sheet 10, 20. For example, it is possible to make the sheet 20 by spraying synthetic filaments 21 directly onto the strips 1 arranged in parallel and embedding them at least partially to make a layer of entangled synthetic filaments 21 comprising a plurality of cavities 22 and within which the strips 1 are trapped.

Preferably the material 100 has an overall thickness, measured perpendicular to the longitudinal development direction X of the reinforcing composite strip 1, comprised between 0.5 mm and 40 mm, even more preferably between 5 mm and 10 mm.

Preferably, the reinforcing composite material 100 can be made in rolls in order to optimise transport space and facilitate laying operations.

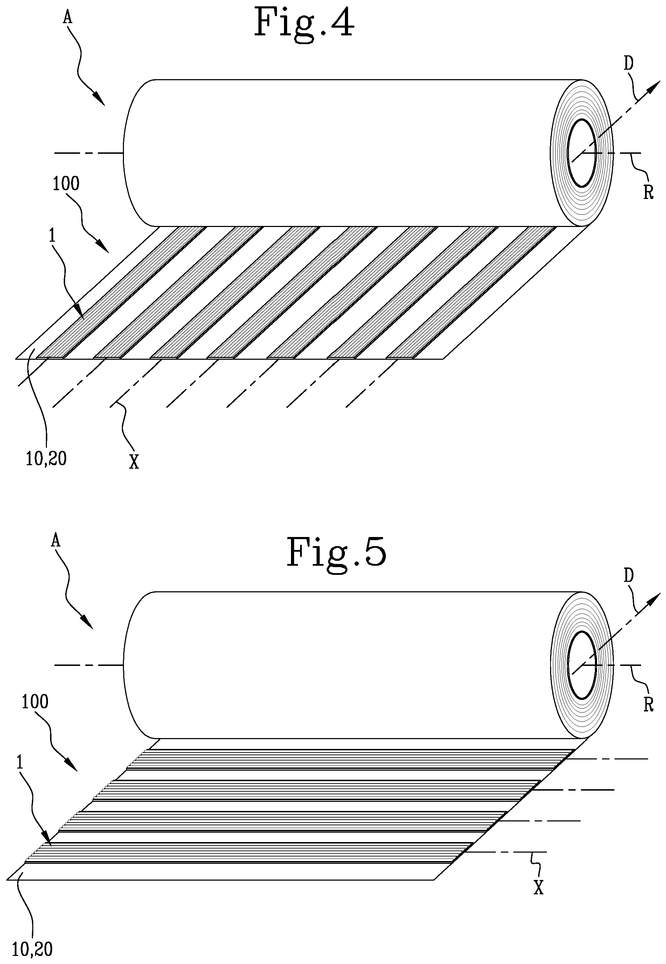

With reference to Figure 4, according to a further aspect of the present invention there is a roll A comprising a reinforcing composite strip 100 wound around a winding and unwinding axis R so that the winding and unwinding direction D of the strip is parallel to the longitudinal development directions X of the reinforcing composite strips 1.

With reference to Figure 5, according to a further aspect of the present invention there is a roll A comprising a reinforcing composite strip 100 wound around a winding and unwinding axis R so that the winding and unwinding direction D of the strip 100 is perpendicular to the longitudinal development directions X of the reinforcing composite strips.

Advantageously, the fact that the roll A can be unrolled with unrolling direction D parallel to a wall or escarpment and that the strips are therefore arranged perpendicular to the wall or escarpment (in the correct tensile tension direction) allows the material 100 to be laid quickly over any length without the need for intermediate cuts, improving the laying efficiency by appropriately dimensioning the width of the roll according to design requirements.

The present invention achieves the proposed aims by overcoming the drawbacks complained of in the prior art and by providing an efficient, high-performance reinforcing composite material capable of improving laying conditions, adherence to the ground and durability while optimising costs.

## Claims

1. Reinforcing composite material (100) comprising at least one sheet (10) of flexible material and a plurality of reinforcing composite strips (1); wherein each reinforcing composite strip (1) comprises:
- a covering capsule (2) surrounding a plurality of longitudinal channels (3) developing parallel to a longitudinal development direction (X) of the reinforcing composite strip (1) and arranged in sequence between opposite lateral ends (1a) of said reinforcing composite strip (1),
- a plurality of longitudinal reinforcing fibres (3a) arranged within the longitudinal channels (3);
said reinforcing composite strips (1) being coupled to said sheet (10) at the respective lower surfaces (2b) of the covering capsules (2) so that their respective longitudinal development directions (X) are parallel;
wherein said reinforcing composite material (100) does not comprise any further reinforcing composite strip developing along respective longitudinal development direction perpendicular to said longitudinal development direction (X) of the composite reinforcing strip (1),
**characterized in that**
on an upper surface (2a) of each covering capsule (2), opposite to the lower surface (2b) coupled to the sheet (10), surface reliefs (7) are made having prevailing development directions that are parallel to the longitudinal development direction (X) of the reinforcing composite strip (1), each surface relief (7) extending at least partially between opposite terminal ends (1b) of said reinforcing composite strip (1).

2. Reinforcing composite material (100) according to claim 1, wherein said surface reliefs (7) have a geometrically variable profile along their prevailing development directions.

3. Reinforcing composite material (100) according to claim 1, wherein said surface reliefs are continuous, extending completely between the opposite terminal ends (1b) of the strip (1).

4. Reinforcing composite material (100) according to claim 1, wherein each relief (7) comprises a respective longitudinal channel developing parallel to the longitudinal development direction (X) of the strip (1) and a plurality of longitudinal reinforcing fibres arranged within the longitudinal channel.

5. Reinforcing composite material (100) according to claim 1, wherein said at least one sheet (10) of flexible material comprises a 3D structure of thread-like elements defining, between them, a plurality of cavities (12, 22) suitable, in use, to be at least partially interpenetrated with the ground.

6. Reinforcing composite material (100) according to claim 5, wherein said 3D structure of thread-like elements is made of tangled synthetic filaments (21), such as polypropylene, preferably made by spraying or extrusion or additive manufacturing.

7. Reinforcing composite material (100) according to claim 6, wherein said reinforcing strips (1) are at least partially embedded in said sheet (10, 20).

8. Reinforcing composite material (100) according to claim 5, wherein said 3D structure of thread-like elements is made with a layer of textile material (11) having a plurality of filament protruding rings (11a) defining said plurality of cavities (12) with each other, said protruding rings (11a) being filaments drawn from said layer of textile material (11) or being made with further filaments interwoven with the layer of textile material (11).

9. Reinforcing composite material (100) according to claim 1, wherein said reinforcing composite material (100) has an overall thickness, measured perpendicularly to the direction of longitudinal development (X) of the reinforcing composite strip (1), comprised between 0.5 mm and 40 mm, even more preferably between 5 mm and 10 mm.

10. Roll (A) comprising a tape of reinforcing composite material (100) according to one or more of the preceding claims, said tape being wound around a winding and unwinding axis (R) so that the winding and unwinding direction (D) of the tape is parallel to the longitudinal development directions (X) of the reinforcing composite strips (1).

11. Roll (A) comprising a tape of reinforcing composite material (100) according to one or more of the preceding claims, said tape being wound around a winding and unwinding axis (R) so that the winding and unwinding direction (D) of the tape is perpendicular to the longitudinal development directions (X) of the reinforcing composite strips (1).

## Patentansprüche

1. Verstärkungsverbundmaterial (100), umfassend mindestens eine Lage (10) aus flexiblem Material und eine Vielzahl von Verstärkungsverbundstreifen (1),
wobei jeder Verstärkungsverbundstreifen (1) Folgendes umfasst:
- eine Abdeckkapsel (2), die eine Vielzahl von Längskanälen (3) umgibt, die sich parallel zu einer Längsentwicklungsrichtung (X) des Verstärkungsverbundstreifens (1) entwickeln und nacheinander zwischen gegenüberliegenden seitlichen Enden (1a) des Verstärkungsverbundstreifens (1) angeordnet sind,
- eine Vielzahl von Längsverstärkungsfasern (3a), die innerhalb der Längskanäle (3) angeordnet sind,
wobei die Verstärkungsverbundstreifen (1) an den jeweiligen unteren Oberflächen (2b) der Abdeckkapseln (2) mit der Lage (10) gekoppelt sind, sodass ihre jeweiligen Längsentwicklungsrichtungen (X) parallel verlaufen,
wobei das Verstärkungsverbundmaterial (100) keinen weiteren Verstärkungsverbundstreifen umfasst, der sich entlang einer jeweiligen Längsentwicklungsrichtung senkrecht zu der Längsentwicklungsrichtung (X) des Verstärkungsverbundstreifens (1) entwickelt, **dadurch gekennzeichnet, dass**
auf einer oberen Oberfläche (2a) jeder Abdeckkapsel (2), die der mit der Lage (10) gekoppelten unteren Oberfläche (2b) gegenüberliegt, Oberflächenerhebungen (7) ausgebildet sind, aufweisend vorherrschende Entwicklungsrichtungen, die parallel zu der Längsentwicklungsrichtung (X) des Verstärkungsverbundstreifens (1) verlaufen, wobei sich jede Oberflächenerhebung (7) zumindest teilweise zwischen gegenüberliegenden Abschlussenden (1b) des Verstärkungsverbundstreifens (1) erstreckt.

2. Verstärkungsverbundmaterial (100) nach Anspruch 1, wobei die Oberflächenerhebungen (7) entlang ihrer vorherrschenden Entwicklungsrichtungen ein geometrisch variables Profil aufweisen.

3. Verstärkungsverbundmaterial (100) nach Anspruch 1, wobei die Oberflächenerhebungen durchgehend sind und sich vollständig zwischen den gegenüberliegenden Abschlussenden (1b) des Streifens (1) erstrecken.

4. Verstärkungsverbundmaterial (100) nach Anspruch 1, wobei jede Erhebung (7) einen jeweiligen Längskanal, der sich parallel zu der Längsentwicklungsrichtung (X) des Streifens (1) entwickelt, und eine Vielzahl von Längsverstärkungsfasern, die innerhalb des Längskanals angeordnet sind, umfasst.

5. Verstärkungsverbundmaterial (100) nach Anspruch 1, wobei die mindestens eine Lage (10) aus flexiblem Material eine 3D-Struktur aus fadenartigen Elementen umfasst, die zwischen ihnen eine Vielzahl von Hohlräumen (12, 22) definieren, die bei Verwendung dazu geeignet sind, zumindest teilweise vom Boden durchdrungen zu werden.

6. Verstärkungsverbundmaterial (100) nach Anspruch 5, wobei die 3D-Struktur aus fadenartigen Elementen aus verflochtenen synthetischen Filamenten (21), wie Polypropylen, ausgebildet ist, die vorzugsweise durch Sprühen, Extrusion oder additive Fertigung ausgebildet sind.

7. Verstärkungsverbundmaterial (100) nach Anspruch 6, wobei die Verstärkungsstreifen (1) zumindest teilweise in die Lage (10, 20) eingebettet sind.

8. Verstärkungsverbundmaterial (100) nach Anspruch 5, wobei die 3D-Struktur aus fadenartigen Elementen mit einer Schicht aus Textilmaterial (11) ausgebildet ist, aufweisend eine Vielzahl von hervorstehenden Filamentringen (11a), die miteinander die Vielzahl von Hohlräumen (12) definieren, wobei die hervorstehenden Ringe (11a) aus der Schicht aus Textilmaterial (11) herausgezogene Filamente sind oder mit weiteren Filamenten ausgebildet sind, die mit der Schicht aus Textilmaterial (11) verwoben sind.

9. Verstärkungsverbundmaterial (100) nach Anspruch 1, wobei das Verstärkungsverbundmaterial (100) eine Gesamtdicke, gemessen senkrecht zu der Längsentwicklungsrichtung (X) des Verstärkungsverbundstreifens (1), aufweist, die zwischen 0,5 mm und 40 mm, noch bevorzugter zwischen 5 mm und 10 mm, liegt.

10. Rolle (A), umfassend ein Band aus Verstärkungsverbundmaterial (100) nach einem oder mehreren der vorhergehenden Ansprüche, wobei das Band um eine Auf- und Abwickelachse (R) gewickelt ist, sodass die Auf- und Abwickelrichtung (D) des Bands parallel zu den Längsentwicklungsrichtungen (X) der Verstärkungsverbundstreifen (1) verläuft.

11. Rolle (A), umfassend ein Band aus Verstärkungsverbundmaterial (100) nach einem oder mehreren der vorhergehenden Ansprüche, wobei das Band um eine Auf- und Abwickelachse (R) gewickelt ist, sodass die Auf- und Abwickelrichtung (D) des Bands senkrecht zu den Längsentwicklungsrichtungen (X) der Verstärkungsverbundstreifen (1) verläuft.

## Revendications

1. Matériau composite de renforcement (100) comprenant au moins une feuille (10) de matériau souple et une pluralité de bandes composites de renforcement (1) ;
chaque bande composite de renforcement (1) comprenant :
- une capsule de recouvrement (2) entourant une pluralité de canaux longitudinaux (3) se développant parallèlement à une direction de développement longitudinale (X) de la bande composite de renforcement (1) et disposés en séquence entre des extrémités latérales opposées (1a) de ladite bande composite de renforcement (1),
- une pluralité de fibres de renforcement longitudinales (3a) disposées à l'intérieur des canaux longitudinaux (3) ;
lesdites bandes composites de renforcement (1) étant couplées à ladite feuille (10) au niveau des surfaces inférieures respectives (2b) des capsules de recouvrement (2) de telle sorte que leurs directions de développement longitudinales (X) respectives soient parallèles ;
ledit matériau composite de renforcement (100) ne comprenant aucune autre bande composite de renforcement se développant le long d'une direction de développement longitudinale respective perpendiculaire à ladite direction de développement longitudinale (X) de la bande composite de renforcement (1), **caractérisé en ce que**
sur une surface supérieure (2a) de chaque capsule de recouvrement (2), opposée à la surface inférieure (2b) couplée à la feuille (10), des reliefs de surface (7) sont réalisés, dont les directions de développement principales sont parallèles à la direction de développement longitudinale (X) de la bande composite de renforcement (1), chaque relief de surface (7) s'étendant au moins partiellement entre les extrémités terminales opposées (1b) de ladite bande composite de renforcement (1).

2. Matériau composite de renforcement (100) selon la revendication 1, lesdits reliefs de surface (7) présentant un profil géométriquement variable le long de leurs directions de développement principales.

3. Matériau composite de renforcement (100) selon la revendication 1, lesdits reliefs de surface étant continus et s'étendant complètement entre les extrémités terminales opposées (1b) de la bande (1).

4. Matériau composite de renforcement (100) selon la revendication 1, chaque relief (7) comprenant un canal longitudinal respectif se développant parallèlement à la direction de développement longitudinale (X) de la bande (1) et une pluralité de fibres de renforcement longitudinales disposées à l'intérieur dudit canal longitudinal.

5. Matériau composite de renforcement (100) selon la revendication 1, ladite au moins une feuille (10) de matériau souple comprenant une structure 3D d'éléments filiformes définissant, entre eux, une pluralité de cavités (12, 22) aptes, lors de l'utilisation, à être au moins partiellement interpénétrées par le sol.

6. Matériau composite de renforcement (100) selon la revendication 5, ladite structure 3D d'éléments filiformes étant constituée de filaments synthétiques enchevêtrés (21), tels que du polypropylène, de préférence fabriqués par pulvérisation ou extrusion ou par fabrication additive.

7. Matériau composite de renforcement (100) selon la revendication 6, lesdites bandes de renforcement (1) étant au moins partiellement intégrées dans ladite feuille (10, 20).

8. Matériau composite de renforcement (100) selon la revendication 5, ladite structure 3D d'éléments filiformes étant constituée d'une couche de matériau textile (11) comportant une pluralité d'anneaux saillants (11a) à filaments définissant entre eux ladite pluralité de cavités (12), lesdits anneaux saillants (11a) étant des filaments tirés de ladite couche de matériau textile (11) ou étant formés à partir de filaments supplémentaires entrelacés avec la couche de matériau textile (11).

9. Matériau composite de renforcement (100) selon la revendication 1, ledit matériau composite de renforcement (100) présentant une épaisseur totale, mesurée perpendiculairement à la direction de développement longitudinale (X) de la bande composite de renforcement (1), comprise entre 0,5 et 40 mm, de préférence entre 5 et 10 mm.

10. Rouleau (A) comprenant un ruban de matériau composite de renforcement (100) selon l'une ou plusieurs des revendications précédentes, ledit ruban étant enroulé autour d'un axe d'enroulement et de déroulement (R) de telle sorte que la direction d'enroulement et de déroulement (D) du ruban soit parallèle aux directions de développement longitudinales (X) des bandes composites de renforcement (1).

11. Rouleau (A) comprenant un ruban de matériau composite de renforcement (100) selon l'une ou plusieurs des revendications précédentes, ledit ruban étant enroulé autour d'un axe d'enroulement et de déroulement (R) de telle sorte que la direction d'enroulement et de déroulement (D) du ruban soit perpendiculaire aux directions de développement longitudinales (X) des bandes composites de renforcement (1).
